Europäisches Patentamt
European Patent Office
Office européen des brevets

(11) Publication number: 0 131 968 A2

(12) EUROPEAN PATENT APPLICATION

(21) Application number: 84108499.9

(22) Date of filing: 18.07.84

(51) Int. Cl.[4]: C 08 F 38/00
C 08 F 10/00

(30) Priority: 18.07.83 JP 129408/83
01.06.84 JP 110775/83

(43) Date of publication of application:
23.01.85 Bulletin 85/4

(84) Designated Contracting States:
BE CH DE FR GB IT LI NL

(71) Applicant: HITACHI, LTD.
6, Kanda Surugadai 4-chome Chiyoda-ku
Tokyo 100(JP)

(72) Inventor: Araya, Kotaro
Mikanohara-ryo 2-20-1, Mizuki-cho
Hitachi-shi Ibaraki-ken(JP)

(72) Inventor: Kakuta, Atsushi
3594, Kanai-cho
Hitachiohta-shi Ibaraki-ken(JP)

(72) Inventor: Mori, Yasuki
2-17-8, Hanayama-cho
Hitachi-shi Ibaraki-ken(JP)

(72) Inventor: Mukoh, Akio
498-21, Kasahara-cho
Mito-shi Ibaraki-ken(JP)

(74) Representative: Strehl, Peter, Dipl.-Ing. et al,
Strehl, Schübel-Hopf, Schulz Patentanwälte
Widenmayerstrasse 17 Postfach 22 03 45
D-8000 München 22(DE)

(54) **Process for producing oriented polymeric material.**

(57) The description is concerned with a process for producing a polymeric material whose molecules are oxiented by polymerizing a gaseous monomer which is gaseous at normal temperature under an atomospheric pressure in the presence of a polymerization catalyst, which comprises bringing said gaseous monomer into contact with a liquid crystal in the mesomorphic state, and effecting at least part of the polymerization reaction of said gaseous monomer material, thereby to produce the polymeric material.

The process can be applied to the production of an oriented polyacetylene which has different physical and optical properties than the polyacetylene prepared by the conventional process.

FIG. 1

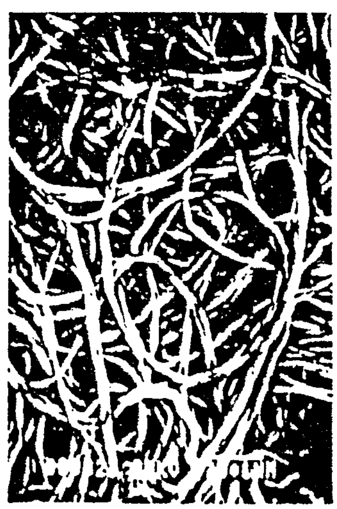

EP 0 131 968 A2

HITACHI, LTD.
EPA-26 722



# PROCESS FOR PRODUCING ORIENTED POLYMERIC MATERIAL

## Field of the Invention

This invention relates to a process for producing quite a novel oriented polymeric material.

## Background of the Invention

In general, a polymeric material is produced by polymerizing a monomer as a starting material by contact with a polymerization catalyst in a solvent. This process, however, is limited in obtaining practical functional polymers. For example, an acetylene polymer expected to be a conductive material can hardly exhibit high conductivity because its fibrils are short and random. Therefore, a process of elongating fibrils is carried out by drawing, but no result as good as expected can be obtained because the fibrils are broken during elongation.

On the other hand, techniques for effecting a polymerization reaction in a liquid crystal substance by using liquid p-methacryloxybenzoic acid as a feed monomer, using a peroxide catalyst, and using a liquid crystal substance as a solvent has been reported (see Journal of the Polymer Science: Part C, No. 23, pp. 231 - 238 (1968)). However, this report simply describes that it is possible to use a liquid crystal material as a solvent, and the polymerization reaction mechanism is not clarified in this report. In reality, it is quite unclear

whether it is possible to apply a liquid crystal to other combinations of a feed monomer with a polymerization catalyst (for example, a case where a feed monomer is gaseous as in the synthesis of an acetylene polymer, or a case where a polymerization catalyst is a Ziegler-Natta catalyst).

With a view to endow conventional materials with quite novel or more excellent properties by applying a liquid crystal substance during the polymerization reaction for producing polymeric materials, the inventors of this invention have repeated ardent studies to attain the above object and have achieved this invention.

Summary of the Invention

It is the object of this invention to provide a process for producing an oriented polymeric material by applying a liquid crystal substance during the course of the polymerization reaction.

The process for producing the oriented polymeric material of this invention is characterized in that a polymerization catalyst is mixed with a liquid crystal substance, and a feed monomer is brought into contact with this mixture. Particularly, the first embodiment of this invention is characterized in that the feed monomer is gaseous at normal temperature and pressure, the second embodiment is characterized in that the polymerization reaction is effected on the interface (free surface) between the liquid crystal and

the feed monomer, and the third embodiment is characterized in that the polymerization catalyst is a Ziegler-Natta catalyst. Further, the fourth embodiment is characterized in that an acetylene monomer is polymerized in the presence of a Ziegler-Natta catalyst.

As described above, it is possible according to this invention to obtain the effect that a stereoregular polymeric material can be obtained by utilizing a liquid crystal substance during the course of the polymerization reaction. Particularly, it is expected to apply the produced polymeric material to structural materials strong like metal or polymeric semiconductor materials of excellent electrical properties.

## Brief Description of the Drawings

Fig. 1 is an electron-microscopic photograph of an acetylene polymer obtained in one example of this invention, and Fig. 2 is an electron-microscopic photograph of an acetylene polymer synthesized in Comparative Example in which no liquid crystal substance is used.

## Detailed Description of the Invention

In the description which follows, the terms "gas (gas-form)", "liquid (liquid-form)" and "solid (solid-form)" are the states at normal temperature and pressure. Further, the term "oriented" means "having some degree of stereoregularity" and is not limited to "having fibrils oriented in the same direction". Further, the process of polymerization of this invention can be performed if a liquid crystal substance is applied during at least part of the course of the polymerization reaction. Accordingly, the scope of this invention covers changing the liquid crystal state into an isotropic liquid state or a solid state, and it may be possible without any obstruction to apply this process in conjunction with other orientation process such as drawing.

[Feed monomers and Optimum polymerization process]

When a feed monomer is gaseous, the polymerization process can be carried out effectively by placing a catalyst-containing liquid crystal substance in a vessel, feeding the feed monomer into the space confined by this vessel and the surface of the liquid crystal, and effecting a polymerization reaction on the surface of the liquid crystal (that is, the interface near the free surface between the feed monomer gas and the liquid crystal). It is thus possible to obtain a film-form (layer-form) functional polymeric material. Examples of the gaseous feed monomers include ethylene, propylene, acetylene, and methylacetylene. When these monomers are used, ionic polymerization (for example, anionic polymerization) takes place usually. However, in case of ethylene, radical polymerization is caused by some catalysts (for example,

when a peroxide is used). Here, it is also possible to effect the polymerization on the surface of a solid, such as metal or glass, coated with the catalyst-containing liquid crystal substance.

When a feed monomer is liquid, the polymerization process can be carried out effectively by dissolving the liquid feed monomer in a liquid crystal substance, and mixing the resulting liquid crystal composition with a catalyst-containing liquid crystal substance. Examples of the liquid feed monomers include styrene and phenylacetylene.

When a feed monomer is solid, the polymerization process can be carried out effectively by dissolving, by heating, the solid feed monomer in a liquid crystal substance and mixing the resulting liquid crystal composition with a catalyst-containing liquid crystal. Examples of the solid feed monomers include N-(p-methoxybenzylidene)-p-aminostyrene, and N-(p-methoxybenzylidene)-p-aminophenylacetylene.

One aspect of the present invention provides a process for producing a monoaxially oriented acetylene high polymer by orienting a liquid crystal material containing a Ziegler-Natta catalyst dissolved therein in a process for the production of acetylene high polymer by polymerizing acetylene on a free surface of the liquid crystal material.

[Liquid crystal substance]

In consideration of the relation with catalysts, the liquid crystal substances to be used in this invention are desirably those in which a catalyst can be easily dissolved or dispersed. Further, when a feed monomer is gaseous as in the case of, for example, acetylene gas, it is desirable that the gas can easily diffuse into a liquid crystal substance. Particularly, liquid crystal substances which readily show a liquid crystal phase at low temperatures and are expected to increase the degree of polymerization are desirable. Although the molecular structure of the liquid crystal is not particularly limited, it is desirable that it contains no groups reactive with the polymerization catalyst used.

[Polymerization catalyst]

Although the polymerization catalysts being used in this invention are not particularly limited, those having a molecular structure which can be oriented with liquid crystal molecules are desirable, and particularly, Ziegler-Natta catalysts are effective.

A Ziegler-Natta catalyst is composed of a transition metal compound and an organometallic compound. Among transition metal compounds and organometallic compounds, those which are particularly effective in this invention are as follows.

1. <u>Transition metal compounds</u>

Transition metals: titanium, vanadium, iron, chromium, and cobalt

General formulas: $Ti(OR)_4$, $M(acac)_3$, and $MO(acac)_2$, wherein R is an alkyl group or an aryl group, M is a transition metal, and acac is an acetylacetonato group

Typical examples: tetra-n-propoxytitanium, bis(acetylacetonato)oxovanadium, tetraisopropoxytitanium, tetra-n-butoxytitanium, tetraisobutoxytitanium, tetraoctadecyloxytitanium, tetraphenoxytitanium, tris(acetylacetonato)titanium, tris(acetylacetonato)vanadium, tris(acetylacetonato)iron, tris(acetylacetonato)chromium, tris(acetylacetonato)cobalt, titanium oxyacetylacetonate, and vanadium oxyacetylacetonate.

2. Organometallic compounds

Metals: magnesium, zinc, aluminum, and tin

General formula: ∿ $MR_n$, wherein M is a metal, and R is an alkyl group or an aryl group

Typical examples: triethylaluminum, triisobutylaluminum, trihexylaluminum, diethylaluminum chloride, di-n-butylaluminum chloride, and ethylaluminum sesquichloride.

Although the ratio of the organometallic compound to MO(acac)$_2$ as a transition metal compound is not particularly limited, it is generally preferable that the ratio of an organometallic compound to a transition metal compound is within the range of 1 to 100 (molar ratio).

When a Ziegler catalyst, for example, is used, this can be added to a liquid crystal substance by a method in which both a transition metal compound and an organometallic compound are added directly to a liquid crystal substance or a method in which a catalyst solution containing a transition metal compound and an organometallic compound is prepared previously, this solution is added to a liquid crystal substance and thereafter only the solvent is removed from the catalyst solution by means of a vacuum pump. According to the latter process, troubles of weighing encountered in using a small amount of a catalyst can be eliminated.

Referring to a case of the production of an acetylene polymer, for example, it is preferable that the polymerization reaction is carried out at a concentration of MO(acac)$_2$, wherein M is vanadium, i. e. a transition metal compound in a Ziegler-Natta catalyst, in the range of 0.001 to 1.0 mol/l of a liquid crystal substance, preferably 0.0001 to 1.0 mol/l of a liquid crystal substance. When this concentration is higher than 1.0 mol/l of a liquid crystal substance, there is a possibility of the disappearance of the liquid

crystal phase. Further, when this concentration is lower than 0.0001 mol/l of a liquid crystal substance, there is a risk that almost all of the acetylene polymer produced takes the form of powder.

Of course, other catalysts are applicable herein and, for example, chlorides of molybdenum or tungsten, Luttinger's catalysts, and rare earth metal catalysts can be used in the production of an acetylene polymer.

[Polymerization reaction mechanism]

Although the mode of a polymerization reaction in this invention is not particularly limited, chain polymerization reactions such as radical polymerization reaction and ionic polymerization (cationic polymerization) are particuarly effective. In addition, consecutive polymerization reactions and copolymerization reactions (alternating copolymerization, random copolymerization, block copolymerization, and graft copolymerization) are applicable, for example.

The polymerization reaction mechanism in this invention can be inferred as follows. When a polymerization catalyst is dissolved (or dispersed) in a liquid crystal, the polymerization catalyst is oriented together with the liquid crystal molecules according to the orientation characteristics of the liquid crystal molecules, and the feed monomer contacts with the catalyst in this state, thus undergoing polymerization.

The polymer grows along the direction of orientation, that is, the direction of the major axis of the liquid crystal substance. Accordingly, the produced polymer can achieve stereoregularity and its degree of polymerization can also be increased. For example, in case of an acetylene polymer produced in an example mentioned below, its fibrils have a length of about 10 μm and a diameter of above 1000 Å, which are larger than the fibril length of 1 μm and the fibril diameter of 200 Å, respectively, in case toluene is used instead of a liquid crystal.

The reaction of a gaseous feed monomer with a catalyst is inferred to proceed in such a manner that, in case of ionic polymerization, the polymer previously formed on the catalyst is pushed forward by the polymer freshly formed on the catalyst side and continues to grow.

In this invention, it is also possible for utilizing the orientation characteristics of a liquid crystal more effectively to orientate liquid crystal molecules forcibly to some degree of regularity by applying an external force such as an electric field or a magnetic field to the catalyst-containing liquid crystal and bringing the feed monomer into contact with this. The polymerization reaction in this manner would produce a polymer having still more excellent stereoregularity.

(Miscellaneous)

When adding a catalyst to a liquid crystal, the catalyst need not be dissolved completely. This is true also when dissolving a feed monomer in a liquid crystal.

In this invention, a plurality of members may be used for each of liquid crystal substances, feed monomers, and catalysts.

In preparing a film it is preferable to use a liquid crystal which is not in a state of an isotropic liquid, but in a state of a liquid crystal. This is because the film prepared with the aid of a liquid crystal in a state of an isotropic liquid is more brittle than that prepared with the aid of a liquid crystal in a state of a liquid crystal and, especially in the case of an acetylene polymer, there is a possibility of failing to maintain the film form because of contact with something.

The following examples further illustrate the present invention in detail.

Example 1

A 300-ml glass vessel was charged in an atmosphere of nitrogen with 1.25 g of vanadiumoxyacetylacetonate represented by the following formula (1) and 40 ml of purified toluene and, after adding 1.9 ml of triethylaluminum, the reaction mixture was reacted under agitation.

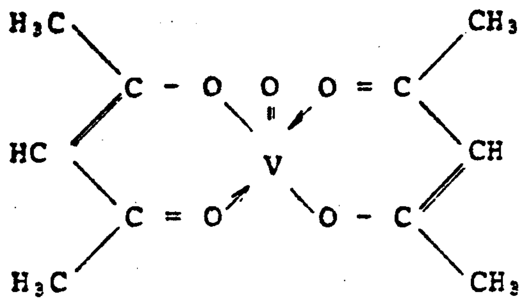

(1)

Another 300-ml glass vessel was charged with 10 ml of an equimolar mixture of 4-(trans-4-n-propylcyclohexyl)-ethoxybenzene represented by formula (2) and 4-(trans-4-n-propylcyclohexyl)-butoxybenzene represented by formula (3). This mixture showed a nematic liquid crystal phase at temperature between 0 and 35°C.

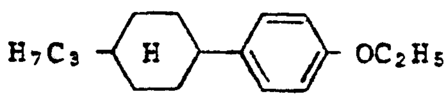

(2)

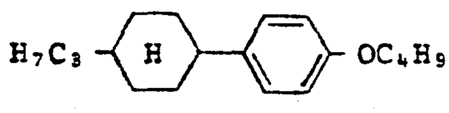

(3)

This liquid crystal mixture was solidified by cooling the glass vessel to -78°C. To this was added 2.0 ml of the above catalyst solution in toluene in an atmosphere of nitrogen. After mounting this vessel on a polymerization apparatus, the nitrogen in the vessel was exhausted and the toluene was removed simultaneously by means of a vacuum pump. Then, the catalyst was uniformly dissolved in the mixture by heating the vessel to 40°C and bringing the mixture to an isotropic liquid. This glass vessel was maintained at a

temperature of 20°C and then purified acetylene gas of a pressure of 500 mmHg was blown into the vessel.

The polymerization immediately took place on the surface of the liquid crystal, and a film-form acetylene polymer was formed. After 30 minutes, unreacted acetylene gas was removed, and the glass vessel was dismounted from the polymerization apparatus and then fed with nitrogen. After removing the liquid crystal mixture containing a dissolved catalyst in an atmosphere of nitrogen by means of a syringe, the reaction mixture was washed several times with each of 100 ml of purified toluene and hydrochloric acid/methanol and dried in vacuum. An electron-microscopic observation of the produced film-form acetylene polymer revealed that this film was an aggregate of large fibrils having a diameter of 0.1 μm and a length of 10 μm (Fig. 1). Here, the magnification of the electron-microscopic photograph of Fig. 1 was 20,000.

Example 2

A liquid crystal mixture containing a dissolved catalyst was prepared in the same manner as in Example 1. A portion of this was attached to a glass substrate in an atmosphere of nitrogen by means of a syringe and then maintained at 20°C. When acetylene was fed, a polymer was formed immediately on the glass substrate. Further, when the same purification treatment as in Example 1 was followed, a film-form acetylene

polymer having an area as large as that of the glass substrate was obtained.

An electron-microscopic observation of this film-form material revealed that it was an aggregate of large fibrils having a diameter of 0.1 μm and a length of above 10 μm.

(Comparative Example)

2.0 ml of the toluene solution of vanadium oxyacetylacetonate described in Example 1 was transferred to another 300-ml glass vessel in an atmosphere of nitrogen and diluted with 8 ml of purified toluene.

This vessel was mounted on a polymerization apparatus and cooled to -78°C, and then the nitrogen in the vessel was exhausted by means of a vacuum pump. When acetylene was fed to this, polymerization took place immediately on the surface of the solution and a film-form acetylene polymer was formed. A film-form acetylene polymer was obtained by carrying out the same purification treatment as in Example 1. An electron-microscopic observation of this film-form material revealed that this film had a structure consisting of bound short fibrils having a diameter of 400 Å (Fig. 2).

Here, the magnification of the photograph of Fig. 2 was 20,000, which was equal to that in Fig. 1.

As compared with the acetylene polymer of this comparative example, those obtained in Examples 1 and 2 were ideal for applications to secondary batteries, solar batteries, or the

like. This is because the broadness of a surface area influences the capacity of a battery and further provides improved electrical conductivity. In addition, the acetylene polymers obtained in Examples 1 and 2 were low in fibril branching and large in fibril length, so that improvement of the draw ratio could be expected. When the acetylene polymers obtained in Examples 1 and 2 were drawn, they could get still higher conductivity.

Example 3

A glass vessel was charged with 10 ml of the liquid crystal as in Example 1, connected to a vacuum line, and then evacuated. The liquid crystal was solidified. On the other hand, 3.2 ml of tetra-n-butoxytitanium ($Ti(OBu)_4$) and 3.8 ml of triethylaluminum ($AlEt_3$) were dissolved in 20 cc of toluene and aged under agitation in an atmosphere of nitrogen. A suitable amount of this solution was added to the above vessel containing the liquid crystal in an atmosphere of nitrogen, and this vessel was connected to a vacuum line and evacuated to remove the toluene. A suitable amount of this was taken and dropped on a glass substrate. After evacuation, acetylene gas was passed. This resulted in the formation of the same film-form acetylene polymer as in Example 1.

Example 4

A catalyst-containing liquid crystal was prepared in the same manner as in Example 1 except that 0.5 ml of titanium

tetrachloride ($TiCl_4$) was used instead of the vanadium catalyst. When ethylene gas as a feed monomer was brought into contact with the surface of this liquid crystal, a polymer (polyethylene) could be obtained in the form of an emulsion. Ethanol was added to this to decompose the catalyst, and the polyethylene was recovered by filtration, washing with water, and drying.

Example 5

A Ziegler catalyst-containing liquid crystal was prepared in the same manner as in Example 1. Separately, 0.5 ml of phenylacetylene was dissolved in an equimolar mixture of the liquid crystal compounds of formulas (2) and (3) in Example 1. This was added to the above catalyst-containing liquid crystal by means of a syringe. After allowing to stand at 20°C for 30 minutes, this was mixed with 100 cc of ethanol, whereupon decomposition occurred at once and a yellow precipitate was formed. The infrared spectrum of this precipitate showed that it was a polymer of phenylacetylene.

Example 6

The same procedure as in Example 5 was repeated except that 0.5 g of N-(p-methoxybenzylidene)-p-aminophenylacetylene was used as a feed monomer instead of phenylacetylene. This monomer was uniformly dissolved by heating to 80°C to obtain feed monomer-containing liquid crystal. Poly-N-(p-methoxybenzylidene)-p-aminophenylacetylene was obtained in

quite the same manner as in Example 1.

Example 7

3 ml of an equmolar mixtures of 4-(trans-4-n-propylcyclohexyl)-ethoxybenzene of formula (1) and 4-(trans-4-n-propylcyclohexyl)-butoxybenzene of formula (2) was charged in a 300-ml glass container under nitrogen atmosphere. The nematic liquid crystal phase to the isotropic liquid phase transition temperature of this mixture was 35°C. 51 μl of tetra-n-butoxytitanium, $Ti(OBu)_4$, and 61 μl of triethylaluminum, $AlEt_3$, were added to the liquid crystal mixture, and the mixture was stirred and aged for 30 min. By the incorporation of the Ziegler-Natta catalyst, the transition temperature was lowered to 27°C.

Separately, a polyimide resin-coated substrate which had been subjected to a unidirectional rubbing was placed in a 300-ml glass container, and the liquid crystal material containing the above catalyst dissolved therein vas allowed to drop onto the glass substrate under nitrogen atmosphere by means of a syringe. This container was fixed to a polymerizer and nitrogen in the container was removed by means of a vacuum pump. While the glass container was kept at a temperature of 15°C, purified acetylene gas was blown into the container under a pressure of 500 mmHg.

The polymerization immediately took place on the surface of the liquid crystal and a filmy acetylene high polymer was

formed. After 30 min, unreacted acetylene was removed, the glass container was removed from the polymerizer and nitrogen was introduced into the container. Washing was repeated using toluene, a methanolic solution of hydrochloric acid and toluene in this order to remove the liquid crystal material and the catalyst, and the product was dried in vacuo to obtain a sample.

The surface of the resulting filmy acetylene high polymer was examined with a scanning electron microscope to reveal that fibrils were oriented in the rubbing direction of the substrate. It was found that this sample had anisotropy in mechanical strengths and could be easily torn in a direction perpendicular to the rubbing direction. It was also found that the sample had anisotropy in electrical resistance and the resistance in the direction of fibril orientation was $3 \times 10^5 \Omega\cdot cm$ and that in a direction perpendicular to the orientation was $2.5 \times 10^6 \Omega\cdot cm$.

Example 8

A glass substrate which was subjected to oblique metallization with silicon monoxide was placed in a 300-ml glass container, and a catalyst-containing liquid crystal prepared in a similar manner to that of Example 7 was allowed to drop onto the substrate under nitrogen atmosphere. The container was fixed to a polymerizer and evacuated by means of a vacuum pump. As soon as acetylene was introduced thereinto at a constant temperature of 15°C, a polymer was formed on the substrate. The washing treatment was carried out in a similar manner to that of Example 7 to obtain a filmy acetylene high polymer.

This filmy material was examined with an electron microscope to reveal that the fibrils were oriented in one direction.

Example 9

The procedure of Example 7 was repeated except that a diffraction grating (1200 slots/mm) was placed in a 300-ml glass container to obtain an acetylene high polymer.

The obtained filmy material was examined with an electron microscope to reveal that the fibrils were oriented in the direction of the stripe of the grating.

Example 10

A glass substrate (30 mm × 60 mm) was placed in a 300-ml glass container, and a catalyst-containing liquid crystal prepared in a similar manner to that of Example 7 was allowed to drop onto the substrate under nitrogen atmosphere. The container was fixed to a polymerizer and nitrogen was removed by means of a vacuum pump. Just before the polymerization, the container was tilted to allow the liquid crystal material on the glass substrate to flow down (a flow method) and acetylene was instantaneously blown into the container, whereby an acetylene high polymer was immediately formed. The washing

operation described in Example 7 was carried out to obtain a filmy sample.

The sample was examined with an electron microscope to reveal that the fibrils were oriented in the direction of the liquid crystal flow.

Example 11

A catalyst-containing liquid crystal prepared in a similar manner to that of Example 7 was put in between two sheets of transparent electrodes (the gap between the electrodes being 10 μm) and an electric field of 5V was applied thereto. This assembly of the transparent electrodes was placed in a 300-ml glass container and the glass container was fixed to a polymerizer and evacuated. When acetylene was introduced, it was observed that an acetylene high polymer was grown from the gap between the electrodes toward the central part. Washing was carried out in a similar manner to that of Example 7 to obtain an acetylene high polymer.

The sample was examined with an electron microscope to reveal that the fibrils were oriented in one direction.

Example 12

2 ml of a catalyst-containing liquid crystal prepared in a similar manner to that of Example 7 was charged in a capillary (10⌀ diameter) capable of introducing acetylene. The capillary was placed in a magnetic field of 1000 G and deaerated under vacuum. Acetylene gas was then introduced,

whereby an acetylene high polymer was formed in the upper part of the capillary. Washing was carried out in a similar manner to that of Example 7 to obtain a filmy acetylene high polymer.

This filmy sample was examined with an electron microscope to reveal that the fibrils were oriented in one direction.

Example 13

3 g of 4-(trans-4-n-pentylcyclohexyl)-4-ethylbiphenyl of formula (3) was placed in a glass container and heated (150°C) to bring it into a nematic liquid crystal state. 51 μl of tetra-n-butoxytitanium), Ti $(OBu)_4$, and 61 μl of triethylaluminum, $AlEt_3$, were added thereto and the catalyst was aged for 30 min. The glass container was then cooled to 50°C, whereby the compound was brought into a smectic liquid crystal state. The solid to smectic liquid crystal transition temperature and the smectic liquid crystal to nematic liquid crystal transition temperature of this liquid crystal material were 34°C and 146°C, respectively. Part of the liquid crystal material containing the above catalyst dissolved therein was put in between two sheets of glass substrates under nitrogen atmosphere. The glass substrates was heated (150°C) to spread the liquid crystal material over the glass substrates and again cooled to 50°C. Two sheets of the substrates were slidden to apply a shearing stress.

One sheet of the substrate was gently torn off. The substrate on which the liquid crystal material remained was placed in a 300-ml glass container, which was then treated in a similar manner to that of Example 1 to obtain an acetylene high polymer.

The resulting sample was examined with an electron microscope to reveal that the fibrils were oriented in one direction.

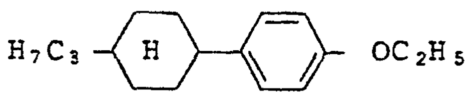

(1)

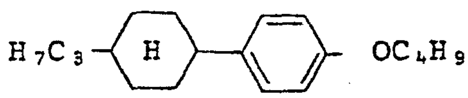

(2)

The obtained monoaxially oriented acetylene high polymer has electrical and optical anisotropies. By utilizing these properties, the polymer can be used, for example, as an organic semiconductor for use in the production of parts for electric resistance element. When the polymer is halogenated, the product can be used as an electric element utilizing the anisotropy in electrical conductivity. Further, it is expected that the process of the present invention may be applied to the production of such a tough structural material as metal or high-molecular semiconductor material having excellent electrical and physical properties.

Patent Claims

1. A process for producing a polymeric material whose molecules are oriented by polymerizing a gaseous monomer which is gaseous at normal temperature under normal pressure in the presence of a polymerization catalyst, which comprises bringing said gaseous monomer into contact and effecting at least part of the polymerization reaction of said gaseous monomer in contact with a liquid crystal in the mesomorphic state, thereby to produce the polymeric material.

2. A process for producing a polymeric material according to claim 1, wherein said polymerization catalyst is mixed with said liquid crystal.

3. A process for producing a polymeric material according to claim 1 or 2, wherein said gaseous monomer is selected from the group consisting of ethylene, propylene, acetylene, and methylacetylene.

4. A process for producing a polymeric material having oriented molecules by polymerizing a feed monomer in the presence of a polymerization catalyst, wherein at least part of said polymerization reaction takes place on the surface of a liquid crystal in the mesomorphic state.

5. A process according to any of the claims 1 to 4, wherein said feed monomer is gaseous at normal temperature and pressure, and the surface of said liquid crystal is the free surface between said liquid crystal layer and said gas.

6. A process for producing a polymeric material whose molecules are oriented by polymerizing a feed monomer in the presence of a polymerization catalyst, wherein said feed monomer is liquid or solid at normal temperature and pressure; said feed monomer and said polymerization catalyst are each separately mixed with a liquid crystal in the mesomorphic state; and thereafter said feed monomer containing said liquid crystal is mixed with said polymerization catalyst containing said liquid crystal to effect at least part of the polymerization reaction.

7. A process according to any of the claims 1 to 6, wherein the polymerization catalyst is a Ziegler-Natta catalyst.

8. A process according to any of the claims 1 to 7, wherein said polymerization reaction is anionic polymerization.

9. A process for producing a polymeric material according to claim 1, wherein the polymerization reaction of an acetylene monomer is effected in contact with a Ziegler-Natta catalyst, dissolved in a liquid crystal in the mesomorphic state.

10. A process for the production of an acetylene polymer according to claim 1, wherein the reaction is conducted on a free surface of the liquid crystal material containing a Ziegler-Natta catalyst dissolved therein.

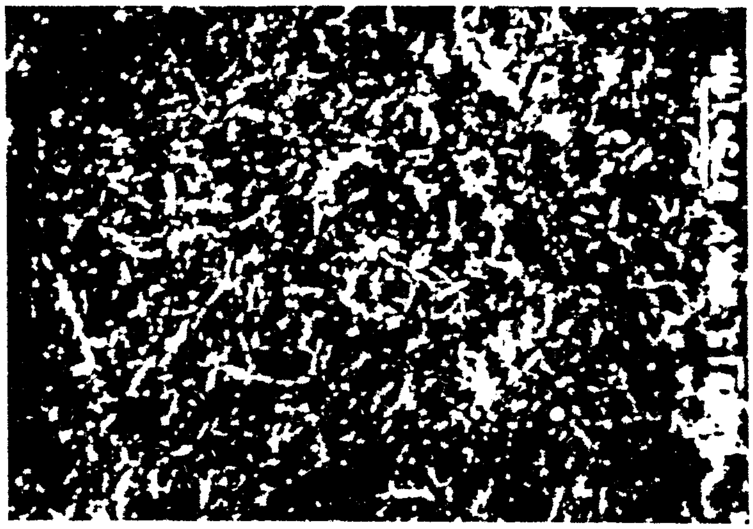

FIG. 2

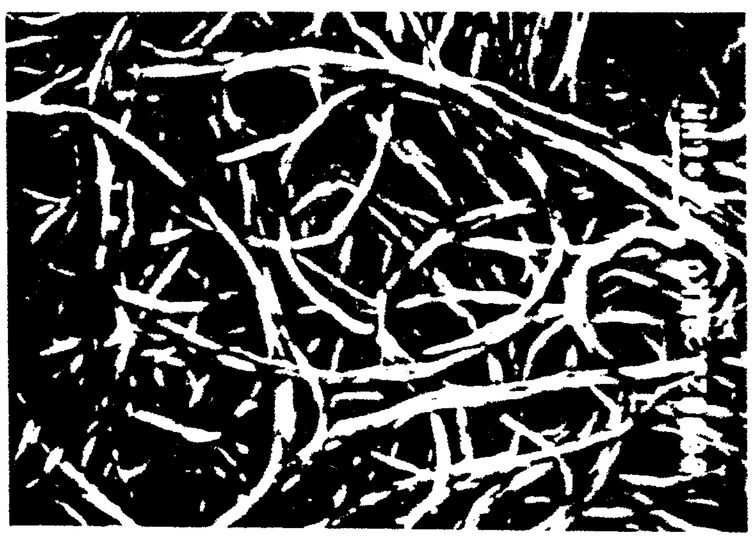

FIG. 1